# EUROPÄISCHE PATENTSCHRIFT

(11) **EP 3 121 049 B1**
(45) Veröffentlichungstag und Bekanntmachung des Hinweises auf die Patenterteilung: **09.05.2018**
(21) Anmeldenummer: 16180968.6
(22) Anmeldetag: 25.07.2016
(51) Int. Cl.: B60K 15/03, B29C 65/00

(54) **KRAFTSTOFFSPEICHERVORRICHTUNG**
FUEL STORAGE DEVICE
DISPOSITIF DE STOCKAGE DE CARBURANT

(30) Priorität: 24.07.2015 DE 102015214083
(43) Veröffentlichungstag der Anmeldung: 25.01.2017
(73) Patentinhaber: ALLGAIER WERKE GmbH, 73066 Uhingen (DE)
(72) Erfinder: Necker, Ulrike, 73066 Uhingen (DE); Funk, Jürgen, 71543 Wüstenrot (DE); Zelßmann, Hagen, 71083 Herrenberg (DE); Woitek, Andreas, 73312 Geislingen (DE); Meyer, Hannes, 73340 Amstetten (DE)
(74) Vertreter: Dr. Weitzel & Partner

(56) Entgegenhaltungen:
- DE-A1-102011 015 049
- DE-A1-102011 117 999
- US-A- 5 178 433

## Beschreibung

Die Erfindung betrifft eine Speichervorrichtung zum Aufnehmen von Kraftstoff. Eine solche Vorrichtung ist Bestandteil eines Kraftfahrzeuges. Sie kann aber auch anderweitig für Kraftstoffe verwendet werden. Als Kraftstoffe kommen insbesondere Benzin oder Diesel in Betracht. Eine solche Vorrichtung umfasst einen Behälter zum Aufnehmen des Kraftstoffes, auch Tank genannt. Der Tank besteht aus Stahlblech oder aus Kunststoff. Meist besteht er aus zwei Schalen, die miteinander vereinigt werden. Dabei kommt es auf die Zugfestigkeit und zugleich die Druckfestigkeit an. Bekanntlich dehnen sich die Kraftstoffdämpfe bei Wärme aus mit der Tendenz, den Tank zu deformieren, wobei die Nähte zwischen den beiden Behälterschalen - geschweißt oder anderweitig miteinander vereinigt - einer Beanspruchung unterworfen werden. Gleiches gilt aber auch bei der Entnahme von Kraftstoff, und damit der entgegengesetzten Tendenz, nämlich im Tankkörper einen Unterdruck zu erzeugen, der ebenfalls die Nähte belastet.

Zur Abhilfe werden Zug-Druck-Stäbe vorgesehen, die an den beiden einander gegenüberliegenden Behälterbereichen fixiert sind. Hierzu gibt es zahlreiche Ausführungsformen. Siehe gattungsbildenden DE102011015049, DE 10 2009 036 911 A1, DE 10 2012 009 157 A1.

WO 2011/018410 A1 beschreibt einen Kraftstoffbehälter, der aus zwei Schalen besteht und einen Zug-Druck-Stab aufweist. Der Stab besteht dabei aus zwei Teilen, die jeweils eine Rastklaue aufweisen. Beim Zusammenfügen kommt es zu einem Ineinandergreifen der Rastklauen. Diese Ausführungsform ist sehr aufwändig.

Vorrichtungen der genannten Art sind Massenartikel auf einem hart umkämpften Markt. Es werden die folgenden Anforderungen gestellt: Die Vorrichtung muss zuverlässig sein, dauerfest, kostengünstig in der Herstellung, von geringem Gewicht und von geringem Bauraum.

Der Erfindung liegt die Aufgabe zugrunde, eine Vorrichtung gemäß dem Oberbegriff von Anspruch 1 derart zu gestalten, dass die genannten Anforderungen erfüllt werden. Diese Aufgabe wird durch die Merkmale von Anspruch 1 gelöst.

Die Erfindung ist anhand der Zeichnung näher erläutert. Darin ist im Einzelnen Folgendes dargestellt:
- Figur 1: zeigt in einer schematischen Schnittansicht einen Kraftstoffbehälter mit zwei Zug-Druck-Ankern.
- Figur 2: zeigt den Zug-Druck-Stab gemäß der Erfindung in einer Explosionsdarstellung.
- Figur 3: zeigt den Gegenstand von Figur 2 in einem Zwischenzustand der Montage.
- Figur 4: zeigt den Gegenstand von Figur 3 in perspektivischer Darstellung.
- Figur 5: zeigt den Gegenstand von Figur 4 in montiertem Zustand.
- Figur 6: zeigt den Gegenstand von Figur 5 in perspektivischer Darstellung.

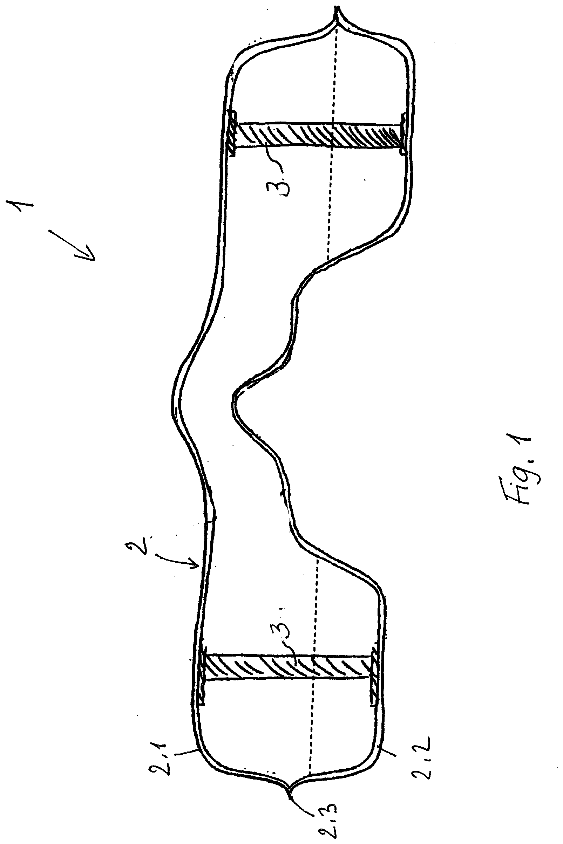

Die in Figur 1 gezeigte Kraftstoffspeichervorrichtung 1 weist einen Behälter 2 zum Aufnehmen von Kraftstoff auf, beispielsweise von Benzin.

Der Behälter 2 umfasst eine obere Behälterschale 2.1 und eine untere Behälterschale 2.2. Die beiden Behälterschalen sind zusammengeschweißt. Siehe die Schweißnaht 2.3.

Die Anzahl der Zug-Druck-Stabeinheiten ist abhängig von der Behälterausführung und der Anforderung des Lastfalls. Jede Stabeinheit 3 ist mit ihrem einen Ende an der oberen Behälterschale 2.1 und mit ihrem anderen Ende an der unteren Behälterschale 2.2 angeschlossen. Der Anschluss ist eine feste Verbindung mittels eines scheibenförmigen Halters 4, der an der betreffenden Schale angeschweißt ist. Der Stab kann wenigstens auf einem Teil seiner Länge hohl oder massiv sein. Alle bisher genannten Bauteile können auch aus Kunststoff bestehen.

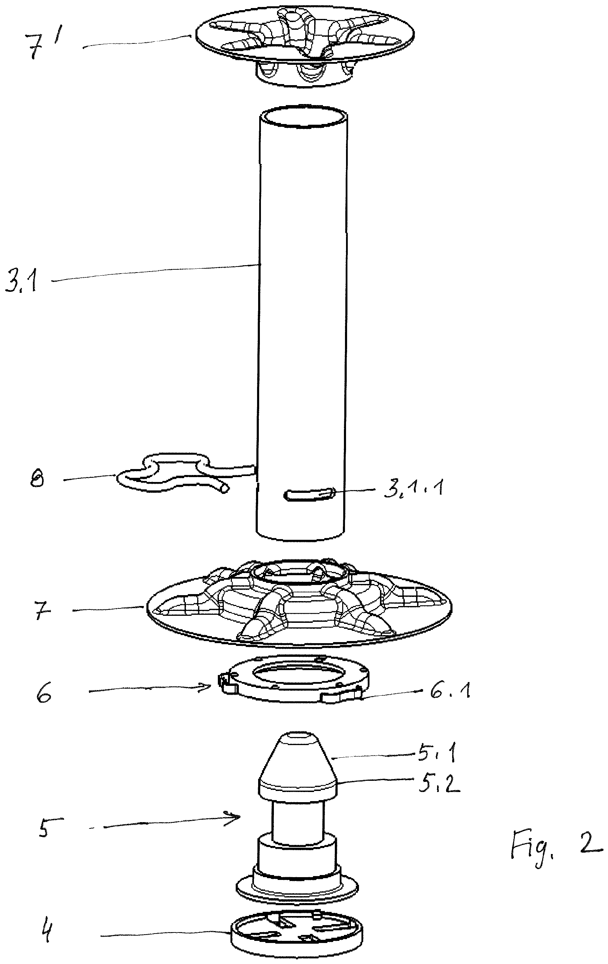

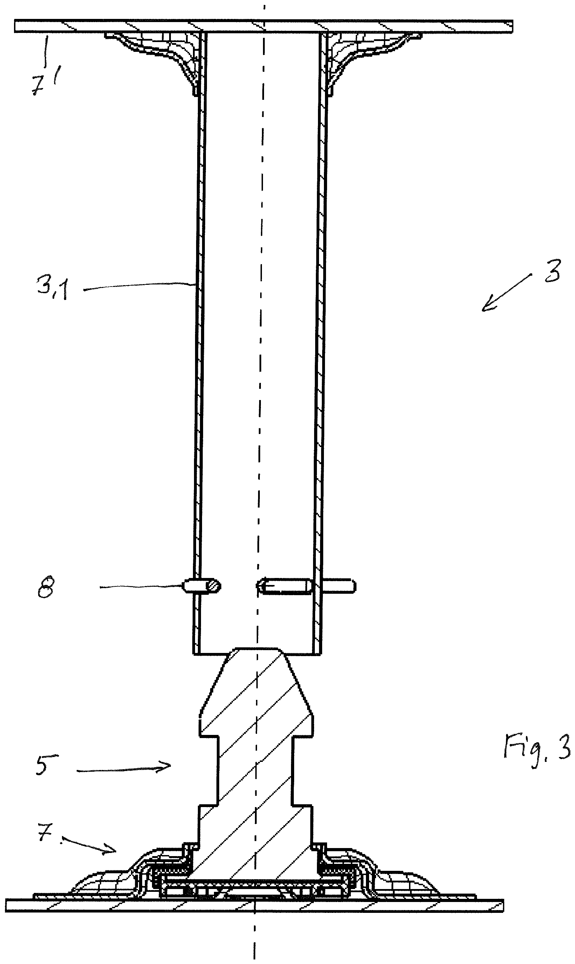

Aus der Explosionsdarstellung gemäß Figur 2 erkennt man den Aufbau der Stabeinheit. In der Figur von unten nach oben gesehen erkennt man die folgenden Bauteile der Stabeinheit 3: Ein Axialfederelement 4 ist scheibenförmig. Es umfasst eine Feder 4.1 - siehe Figur 3. Aufgrund der Feder 4.1 ist es bei Ausüben eines Druckes in axialer Richtung geringfügig komprimierbar. Es ermöglicht den Ausgleich von Fertigungstoleranzen bei der Montage.

Es folgt ein Einrastelement 5. Dieses umfasst einen nach oben sich verjüngenden Konus 5.1 sowie eine Umfangsnut 5.2 - siehe wiederum Figur 3.

Es folgt ein Radialfederelement 6. Dieses ist ringförmig. An seinem Umfang weist es Federnasen 6.1 auf. Es dient wiederum dem Toleranzausgleich und der Geräuschdämpfung.

Schließlich folgt ein Blechhalter 7. Dieser dient einerseits dem Aufnehmen der genannten Elemente 4, 5 und 6, und andererseits dem Befestigen an der unteren Behälterschale 2.2. Die Befestigung kann mittels Schrauben oder durch Verschweißen vorgenommen werden.

Weiter oben in Figur 2 folgt eine Hülse 3.1. Diese weist an ihrem unteren Ende Umfangsschlitze 3.1.1 auf.

Ferner erkennt man eine Sicherungsfeder 8. Diese wird in die Umfangsschlitze 3.1.1 eingeschoben. Beim Einschieben greift sie in die Umfangsnut 5.2 des Einrastelements 5 ein und stellt somit eine Schnappverbindung her.

Am oberen Ende der Hülse 3.1 befindet sich wiederum ein Halter 7' zum Anschweißen oder Anschrauben an die obere Behälterschale 2.1.

Die Montage der Stabeinheit 3 verläuft wie folgt: Es werden das Axialfederelement 4, das Einrastelement 5, das Radialfederelement 6 und der Blechhalter 7 miteinander montiert.

Ferner wird die Sicherungsfeder 8 in der Hülse 3.1 montiert.

Sodann wir die erstgenannte Baugruppe aus den Elementen 4, 5, 6, 7 mit der unteren Behälterschale 2.2 fest verbunden, sowie die obere Baugruppe mit den Elementen 7', 3.1, 8 mit der oberen Behälterschale 2.1. Sodann werden die beiden Behälterschalen mit den genannten beiden Baugruppen zusammengefügt.

Figur 3 zeigt die beiden genannten Baugruppen in vormontiertem Zustand.

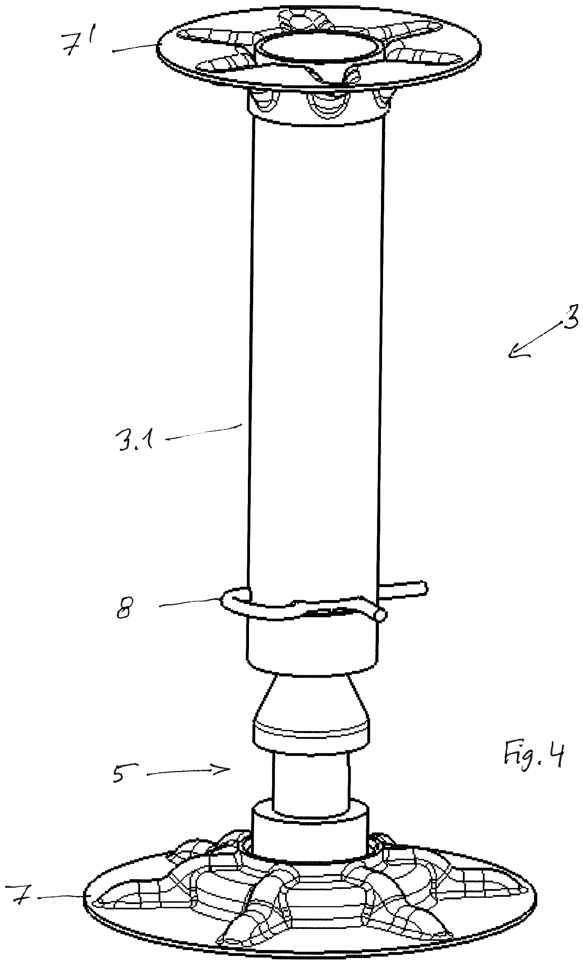

Figur 4 zeigt den Gegenstand von Figur 3, wiederum in vormontiertem Zustand, jedoch in einer perspektivischen Darstellung.

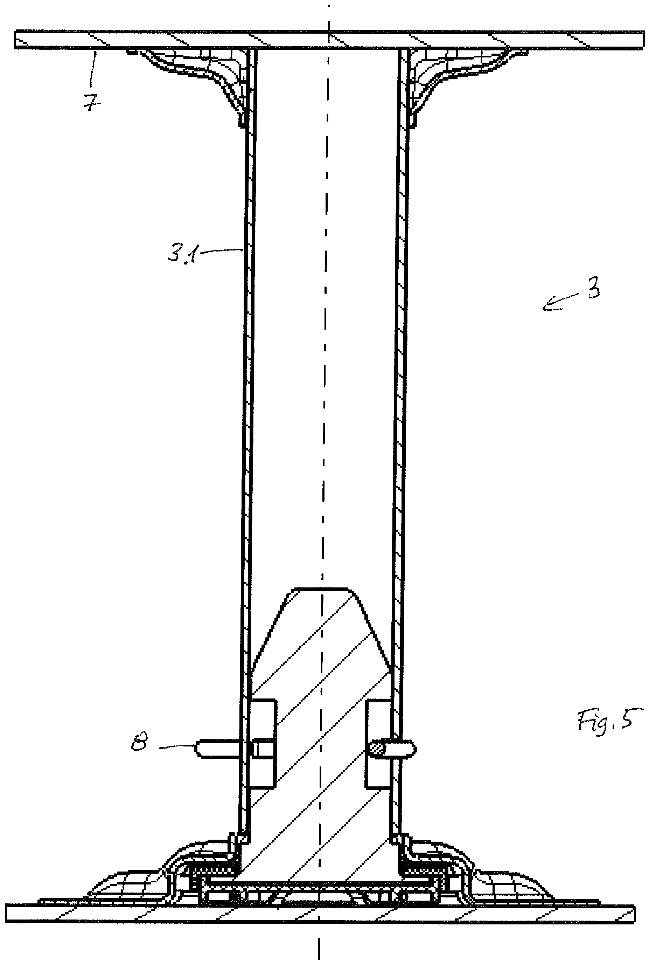

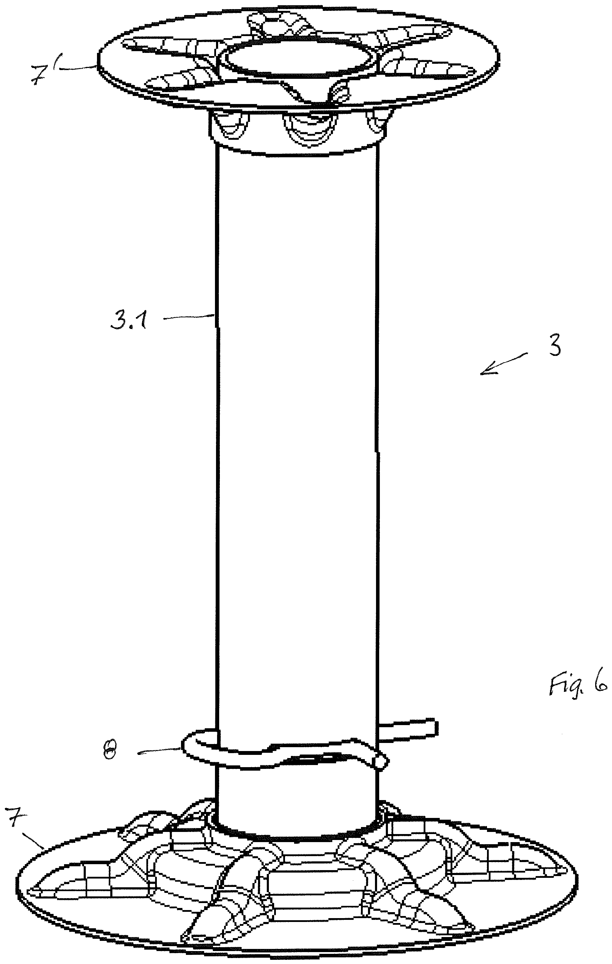

Die Figuren 5 und 6 zeigen die fertig montierte Stabeinheit 3, so wie sie sich im Gebrauchszustand zwischen der oberen und der unteren Behälterschale 2.1, 2.2 befindet.

### Bezugszeichenliste

- 1: Kraftstoffspeichervorrichtung
- 2: Behälter
- 2.1: oberes Behälterteil
- 2.2: unteres Behälterteil
- 2.3: Schweißnaht
- 3: Zug-Druck-Stabeinheit
- 3.1: Hülse
- 3.1.1: Schlitz
- 4: Axialfederelement
- 5: Einrastelement
- 5.1: Konus
- 5.2: Umfangsnut
- 6: Radialfederelement
- 6.1: Federnase
- 7: Blechhalter
- 7': Halter
- 8: Sicherungsfeder

## Patentansprüche

1. Kraftstoffspeichervorrichtung (1), umfassend die folgenden Merkmale:
1.1 einen Kraftstoffbehälter (2) zum Aufnehmen von Kraftstoff;
1.2 wenigstens eine Zug-Druck-Stabeinheit (3), die an zwei einander gegenüberliegenden Behälterbereichen fixiert ist;
1.3 ein am betreffenden Behälterbereich angeordnetes Einrastelement (5);
1.4 die Zug-Druck-Stabeinheit umfasst eine Hülse (3.1);
1.5 in montiertem Zustand ist das betreffende Ende der Hülse (3.1) über das freie Ende des Einrastelementes (5) gestülpt, wobei durch einen Ringwulst (8) des einen der beiden Elemente (3.1) und eine Umfangsnut (5.2) des anderen der beiden Elemente (5.1) eine Schnappverbindung entsteht, **gekennzeichnet durch** die folgenden Merkmale:
1.6 der Ringwulst (8) ist aus einer Sicherungsfeder gebildet;
1.7 das Einrastelement (5) ist ein Zapfen, der mit seinem einen Ende an einer der Behälterschalen fixiert ist und mit seinem anderen Ende in die Hülse (3.1) hineinragt.

2. Kraftstoffspeichervorrichtung (1) nach Anspruch 1, **dadurch gekennzeichnet, dass** im Bereich der Schnappverbindung zum Ausgleich von Fertigungstoleranzen für die Montage ein Axialfederelement (4) und ein Radialfederelement (6) vorgesehen sind.

3. Kraftstoffspeichervorrichtung (1) nach Anspruch 2, **gekennzeichnet durch** die folgenden Merkmale:
3.1 einen Halter (7), der an einer Behälterschale (2.1) fixiert ist;
3.2 das Axialfederelement (4), das Radialfederelement (6) und das Einrastelement (5) sind koaxial innerhalb des Halters (7) angeordnet.

4. Kraftstoffspeichervorrichtung (1) nach einem der Ansprüche 1 bis 3, **dadurch gekennzeichnet, dass** sich die Umfangsnut (5.2) über eine axiale Länge erstreckt, die größer als der Durchmesser der Ringwulst (8) ist, um die Gesamtlänge der Zug-Druck-Stabeinheit (3) entsprechend einer Volumenänderung des Kraftstoffbehälters (2) zu ändern.

## Claims

1. Fuel storage device (1), comprising the following features:
1.1 a fuel tank (2) for receiving fuel;
1.2 at least one tension-compression rod unit (3) fixed to two opposite tank regions;
1.3 a latching element (5) arranged on the respective tank region;
1.4 the tension-compression rod unit comprises a sleeve (3.1);
1.5 in the assembled state, the respective end of the sleeve (3.1) is pushed over the free end of the latching element (5), wherein a snap connection is produced by an annular bead (8) of one of the two elements (3.1) and a circumferential groove (5.2) of the other of the two elements (5.1), **characterized by** the following features:
1.6 the annular bead (8) is formed from a securing spring;
1.7 the latching element (5) is a pin which with its one end is fixed to one of the tank shells and protrudes with its other end into the sleeve (3.1).

2. Fuel storage device (1) according to claim 1, **characterized in that** in the region of the snap connection an axial spring element (4) and a radial spring element (6) are provided for mounting to compensate manufacturing tolerances.

3. Fuel storage device (1) according to claim 2, **characterized by** the following features:
3.1 a holder (7) fixed to a container shell (2.1);
3.2 the axial spring element (4), the radial spring element (6) and the latching element (5) are arranged coaxially within the holder (7).

4. Fuel storage device (1) according to one of the claims 1 to 3, **characterized in that** the circumferential groove (5.2) extends over an axial length which is greater than the diameter of the annular bead (8) in order to change the total length of the tension-compression rod unit (3) according to a volume change of the fuel tank (2).

## Revendications

1. Dispositif de stockage de carburant (1) comportant les caractéristiques suivantes :
1.1 un réservoir de carburant (2) destiné à contenir du carburant ;
1.2 au moins une unité de bielle de traction et de poussée (3) fixée à deux parties du réservoir se faisant face ;
1.3 un élément d'emboîtement (5) disposé sur la partie du réservoir en question ;
1.4 l'unité de bielle de traction et de poussée comprend une douille (3.1) ;
1.5 dans l'état monté, l'extrémité en question de la douille (3.1) est emboîtée par-dessus l'extrémité libre de l'élément d'emboîtement (5), un assemblage enclenché étant produit par un bourrelet annulaire (8) de l'un des deux éléments (3.1) et une rainure circonférentielle (5.2) de l'autre élément (5.1),
**caractérisé en ce que** :
1.6 le bourrelet annulaire (8) est formé par un ressort de fixation ;
1.7 l'élément d'emboîtement (5) est un cône qui est fixé par une extrémité à l'une des coques du réservoir et qui dépasse par son autre extrémité dans la douille (3.1).

2. Dispositif de stockage de carburant (1) selon la revendication 1, **caractérisé en ce qu'**il est prévu au niveau de l'assemblage enclenché, afin de compenser les tolérances de fabrication au montage, un élément de ressort axial (4) et un élément de ressort radial (6).

3. Dispositif de stockage de carburant (1) selon la revendication 2, **caractérisé en ce qu'**il comprend :
3.1 une monture (7) qui est fixée sur une coque de réservoir (2.1) ;
3.2 l'élément de ressort axial (4), l'élément de ressort radial (6) et l'élément d'emboîtement (5) sont disposés de façon coaxiale à l'intérieur de la monture (7).

4. Dispositif de stockage de carburant (1) selon l'une des revendications 1 à 3, **caractérisé en ce que** la rainure circonférentielle (5.2) s'étend sur une longueur axiale qui est plus grande que le diamètre du bourrelet annulaire (8), afin de modifier la longueur totale de l'unité de bielle de traction et de poussée (3) en fonction d'un changement de volume du réservoir de carburant (2).
